# EUROPEAN PATENT APPLICATION

(11) **EP 1 732 013 A1**
(43) Date of publication of application: **13.12.2006**
(21) Application number: 05012124.3
(22) Date of filing: 06.06.2005
(51) Int. Cl.: G06F 17/30

(54) **Method and device for searching a data unit in a database**

(71) Applicant: DEUTSCHE THOMSON-BRANDT GMBH, 78048 Villingen-Schwenningen (DE)
(72) Inventor: Klausberger, Wolfgang, 30519 Hannover (DE); Blawat, Meinolf, 30659 Hannover (DE); Hake, Hans-Hermann, 30163 Hannover (DE); Kubsch, Stefan, 31559 Hohnhorst (DE)
(74) Representative: Rittner, Karsten

(57) **Abstract**

Search engines for searching within home networks shall be optimised. Therefore, it is suggested to dynamically adapt a weight of an individually metadata of a data unit of the database (1) by analysing an external database. For example, web page information (6) is used to individually influence the ranking of the search results.

## Description

### Field of the invention

The present invention relates to a method of searching at least one data unit in a database for a home network including the steps of assigning individual metadata to each pre-defined data unit of the database, wherein each of the individual metadata includes a specific weight, and ranking the data units of the database in accordance with the specific weights of the metadata. The specific weights (and the ranking) are highly context-dependent for different types of data units (e.g. music, film). Furthermore, the present invention relates to a corresponding device for searching data units in a database.

### Background

With the growing storage capabilities in home environments or home network the need for search engines to support the user in searching and navigating through his media content material is essential. For that purpose content-based producible metadata describing the stored essence are automatically collected or generated and stored together with the essence. This metadata will support the user in searching and browsing through his content material.

When the user wants to find a specific piece of his stored content he will be supported by a visual user interface which could be build of three areas: A search box for the input of a text based search query (alternative: speech input), a window for the visualization of the results and a navigation tree window which contains the whole category list of the analysed and stored content.

with the formulated search request of the user the search engine processes the stored metadata to find the related piece of essence. A not insignificant amount of stored content implied results will be presented to the user. The results are presented in a list which is structured in a specific order. However, the ranking of the results in the list is often not usable because it is too unspecific and not individual.

### Invention

It is the object of the present invention to provide an improved search within a limited data area such as a home network.

According to the present invention this object is solved by a method of searching at least one data unit in a data base for a home network including the steps of assigning individual metadata to each pre-defined data unit of said data base, wherein each of said individual metadata includes a specific weight, and ranking the data units of said data base in accordance to the specific weights of said metadata, as well as dynamically adapting said weight of an individual metadata of one of said data units of said data base by analysing an external data base or at least a part of said external data base.

Furthermore, there is provided a device for searching at least one data unit in a data base for a home network including processing means for assigning individual metadata to each predefined data unit of said data base, wherein each of said individual metadata includes a specific weight, and calculating means connected to said processing means for ranking the data units of said data base in accordance to the specific weights of said metadata, as well as analysing means connected to said processing means for analysing an external data base or at least a part of said external data base and for providing a respective analysing result, wherein said weight of an individual metadata of at least one of said data units of said data base is dynamically adaptable by said processing means on the basis of said analysing result.

The invention renders possible more intelligent and flexible search engines for searching within a limited area, such as a home network, by usage of external information. Result lists are more relevant and shorter. Metadata on AV-contents (Audio/Video) can be supplemented or updated.

Preferably, the external database is provided via the Internet or via an intranet. For dynamically adapting the weight of an individual metadata a pre-given web page may be used. Thus, if the web page is updated, the analysing result of the web page will change and, consequently, also the weight for the metadata will change.

Alternatively, the external database may be provided via a broadcast channel. Specifically, information from the Teletext or Videotext can be used for calculating a specific weight.

According to a further preferred embodiment the ranking of the data units in the database is evaluated by additionally considering a pre-defined user profile. This enables to consider the behaviour of the user with respect to his usage of the data of the database for calculating the weights of the metadata.

The weight of an individual metadata may be updated permanently. Thus, actual weights are available at any time without delay.

According to a further preferred embodiment a data unit is a document, said document includes plural keywords, a specific weight is assigned to each of said keywords and the sum of the weights of said keywords of said documents is assigned to said document as metadata for ranking said document within a plurality of documents in said database. Thus, a very specific weighting value, i.e. metadata, can be evaluated for each document and as a result a highly individual ranking of the documents can be obtained.

### Drawings

The present invention will now be described in more detail in connection with the attached drawing showing a principal block diagram of a preferred embodiment of the inventive method.

### Exemplary embodiments

In the following exemplary embodiments of the present invention are described in detail.

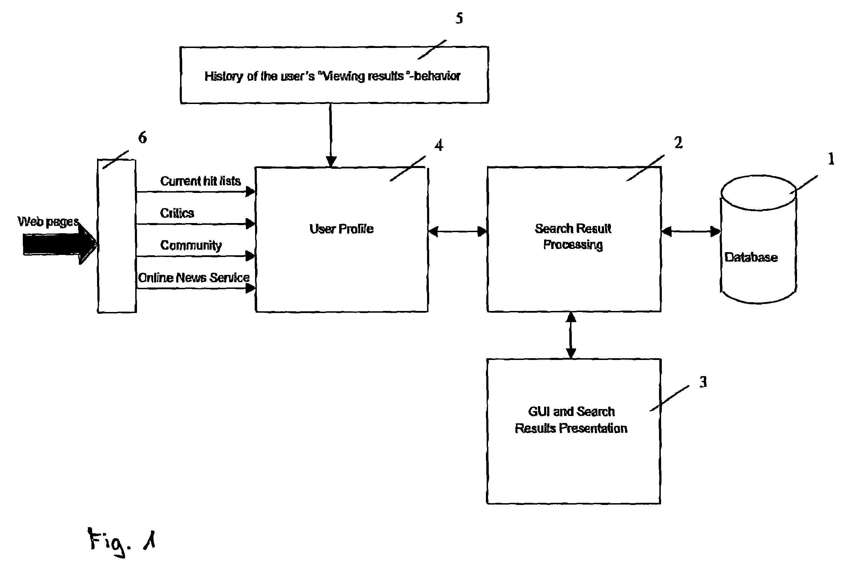

According to the block diagram of Fig.1 a search is performed on a database 1. For the sake of clarity the search engine is not depicted. The search result is processed in processing block 2. With the help of a GUI 3 (Graphical User Interface) the search result processed by processing block 2 is presented.

Typically, the search engine provides a large result list and evaluates metadata. In this status the result list is very unspecific. Therefore, the search result ranking is improved by using further criteria including a user profile 4. This user profile block 4 can generally be seen as filter for filtering the results in conformity with a subjective scale of importance.

For example, the user profile 4 is configured by a history 5 of behaviour of the user. This history 5 represents the user's "viewing results"-behaviour for instance. With this history the ranking of the search results can be formed more individually.

However, to further improve the search result ranking additional information 6 from web pages is used. With such web page information a specific search result for example in case of TV-programs, movies, music, e-books etc. can be appraised.

As web page information one or more of the following criteria can be utilised:
1. Current hit lists available at specific web pages
2. Written critics available at specific web pages
3. Specific community web pages
4. Specific online news web services e.g. Google News

Thus, according to the present invention, result lists can be resorted or reduced, wherein external information from external databases like the Internet is used for searching in a home network. Search results that are conventionally found are subjected to post-processing.

According to a first embodiment the user can configure the user profile 4 as to what kind or kinds of criteria mentioned before should be used.

In a second preferred embodiment the appraising of the search results is processed after the results are found in the database.

In contrast to that according to a third embodiment for a faster presentation of the ranked search results the appraising of all relevant metadata entries in the database is performed in the background of the running system and a ranking value will be added to a related metadata.

A combination of the features of the above-described embodiments is possible to obtain other embodiments.

In the following a specific example for searching among multimedia documents locally available and using external web pages to rank the results will be introduced. In this example a number of movies is stored in a home network. When searching among these locally stored movies for a movie with a keyword "Leonardo di Caprio", one may get e.g. his latest movie. His movie "Titanic" is also stored but it will be assumed that it is ranked somewhere lower in the list. According to the invention, the ranking is effected by the latest news, which mainly mention the latest movie.

When the same search under the same locally stored movie database is repeated with the same keyword some days later and in the meantime some news regarding the "Titanic" has been published on the web, then one will get the movie "Titanic" ranked higher because the keyword "Titanic" relating to this movie is ranked higher or has more weight than before. The same may happen, e,g. when another actor from "Titanic" is in the news even if one is not aware thereof, or if someone published a positive critic on a special web page. According to a basic embodiment the web page itself is not shown. Thus, the normal Internet page is only used as public external information for ranking the search results.

According to another example a search can also be performed with several keywords. In this case the method for ranking search results in a home network comprises the steps of
- searching among locally available multimedia documents for given keywords,
- for each found multimedia document that matches the keywords, determining all associated keywords, e.g. synonymous keywords,
- calculating and assigning a weight to each of the determined keywords of the current multimedia document, wherein information from the web/predefined web pages is used (additionally a user profile may be used),
- exploiting (e.g. summing up) the weights of the keywords of the current multimedia document, and assigning the sum to the current multimedia document and
- ranking the found multimedia documents according to their assigned weight.

The main advantage for the user when utilising the methods and devices of the above-described embodiments is that a result ranking is based on individual importance criteria.

## Claims

1. Method of searching at least one data unit in a data base (1) for a home network including the steps of
- assigning individual metadata to each predefined data unit of said data base (1), wherein each of said individual metadata includes a specific weight, and
- ranking (2) the data units of said data base (1) in accordance to the specific weights of said metadata,
**characterized by**
- dynamically adapting said weight of an individual metadata of one of said data units of said data base (1) by analysing an external data base (6) or at least a part of said external data base.

2. Method according to claim 1, wherein said external database (6) is provided via the Internet or an intranet.

3. Method according to claim 2, wherein said external database (6) is a pre-given web page.

4. Method according to one of the preceding claims, wherein said external database (6) is provided via a broadcast channel.

5. Method according to claim 4, wherein said external database (6) is provided via Teletext or Videotext.

6. Method according to one of the preceding claims, wherein said ranking (2) is performed by additionally considering a pre-defined user profile (4).

7. Method according to one of the preceding claims, wherein said weight of an individual metadata is permanently updated.

8. Method according to one of the preceding claims, wherein a data unit is a document, said document includes plural keywords, a specific weight is assigned to each of said keywords and the sum of the weights of said keywords of said document is assigned to said document as metadata for ranking said document within a plurality of documents in said database.

9. Device for searching at least one data unit in a data base (1) for a home network including
- processing means for assigning individual metadata to each predefined data unit of said data base (1), wherein each of said individual metadata includes a specific weight, and
- calculating means connected to said processing means for ranking (2) the data units of said data base (1) in accordance to the specific weights of said metadata,
**characterized by**
- analysing means connected to said processing means for analysing an external data base (6) or at least a part of said external data base and for providing a respective analysing result, wherein
- said weight of an individual metadata of at least one of said data units of said data base is dynamically adaptable by said processing means on the basis of said analysing result.
